# EUROPEAN PATENT APPLICATION

(11) **EP 4 478 636 A1**
(43) Date of publication of application: **18.12.2024**
(21) Application number: 23752368.3
(22) Date of filing: 08.02.2023
(51) Int. Cl.: H04L 1/18

(54) **RESPONSE FEEDBACK METHOD, APPARATUS, AND TERMINAL**

(30) Priority: 11.02.2022 CN 202210130233
(71) Applicant: VIVO MOBILE COMMUNICATION CO., LTD., Dongguan, Guangdong 523863 (CN)
(72) Inventor: LI, Na, Dongguan, Guangdong 523863 (CN); PAN, Xueming, Dongguan, Guangdong 523863 (CN); SHEN, Xiaodong, Dongguan, Guangdong 523863 (CN)
(74) Representative: Lavoix
(86) International application number: PCT/CN2023/074989
(87) International publication number: WO 2023/151588

(57) **Abstract**

This application discloses a response feedback method and apparatus and a terminal, pertaining to the field of communication technologies. The response feedback method of embodiments of this application includes the following steps: determining, by a terminal, a feedback mode and/or feedback resource for response feedback based on first information in a case that the terminal is scheduled to feed back HARQ information of N downlink transmissions in one time unit, where the first information includes at least one of the following: the number N of downlink transmissions, the number of group radio network temporary identities, and whether a network-side device has configured a first parameter. The embodiments of this application can determine the feedback mode and/or feedback resource for feedback response.

## Description

### CROSS-REFERENCE TO RELATED APPLICATIONS

This application claims priority to Chinese Patent Application No. 202210130233.8, filed in China on February 11, 2022, which is incorporated herein by reference in its entirety.

### TECHNICAL FIELD

This application pertains to the field of communication technologies, and specifically relates to a response feedback method and apparatus, and a terminal.

### BACKGROUND

After a base station transmits a physical downlink shared channel (Physical Downlink Shared Channel, PDSCH) or a physical downlink control channel (Physical Downlink Control Channel, PDCCH) (for example, a PDCCH indicating a semi-persistent scheduling (Semi-Persistent Scheduling, SPS) PDSCH release), user equipment (User Equipment, UE) receives and decodes the PDSCH/PDCCH, and then feeds back a decoding result to the base station, informing the base station of whether the PDSCH/SPS PDSCH release PDCCH is successfully decoded. The base station makes the next scheduling decision based on the feedback from the UE. Such process is called hybrid automatic repeat request (Hybrid Automatic Repeat Request, HARQ). HARQ feedback modes include HARQ-acknowledge (Acknowledge, ACK)/not acknowledge (Not Acknowledge, NACK) and HARQ NACK only. In HARQ-ACK/NACK feedback mode, if the UE successfully decodes the PDSCH/PDCCH, it feeds back ACK, otherwise it feeds back NACK. In HARQ NACK only feedback mode, the UE feeds back NACK when it fails to successfully decode the PDSCH/PDCCH, and does not feed back information at other times.

For NACK only feedback mode, its PUCCH may be group common, meaning that different UEs can feed back NACK information of the same PDSCH on the same PUCCH. In NR, a time unit (slot or sub-slot) of HARQ feedback is determined based on k1 (PDSCH-to-HARQ feedback timing indicator) indicated in downlink control information (Downlink Control Information, DCI) for downlink scheduling, where k1 represents the number of time units from a time unit where PDSCH ends to a time unit for HARQ feedback. To be specific, when UE receives PDSCH in time unit n, the UE feeds back its corresponding HARQ information in time unit n+k1.

For NACK only feedback mode, a PUCCH for NACK only feedback is group common. Therefore, when UE feeds back NACK on one PUCCH, a base station considers that a PDSCH corresponding to the NACK is decoded incorrectly and performs a corresponding PDSCH retransmission. When multiple PDSCHs are scheduled in the same time unit (slot/sub-slot), how the UE feeds back the NACK only of multiple PDSCHs needs to be addressed.

### SUMMARY

Embodiments of this application provide a response feedback method and apparatus, and a terminal, so as to determine a feedback mode and/or feedback resource for feedback response.

According to a first aspect, a response feedback method is provided, where the response feedback method includes:
determining, by a terminal, a feedback mode and/or feedback resource for response feedback based on first information in a case that the terminal is scheduled to feed back hybrid automatic repeat request HARQ information of N downlink transmissions in one time unit, where N is a positive integer;
the first information includes at least one of the following: the number N of downlink transmissions, the number of group radio network temporary identities, and whether a network-side device has configured a first parameter;
the first parameter is used to indicate a feedback mode for response feedback and/or a mode for feedback resource selection;
the feedback mode includes a first feedback mode and a second feedback mode, where the first feedback mode is: a terminal feeds back an acknowledge response ACK in a case that the terminal successfully decodes a physical downlink shared channel and/or physical downlink control channel; and a terminal feeds back a negative acknowledge response NACK in a case that the terminal fails to successfully decode a physical downlink shared channel and/or physical downlink control channel; and
the second feedback mode is: a terminal feeds back a negative acknowledge response only in a case that the terminal fails to successfully decode a physical downlink shared channel and/or physical downlink control channel.

According to a second aspect, a response feedback apparatus is provided, where the response feedback apparatus includes:
a processing module, configured to determine a feedback mode and/or feedback resource for response feedback based on first information in a case that a terminal is scheduled to feed back hybrid automatic repeat request HARQ information of N downlink transmissions in one time unit, where N is a positive integer;
the first information includes at least one of the following: the number N of downlink transmissions, the number of group radio network temporary identities, and whether a network-side device has configured a first parameter;
the first parameter is used to indicate a feedback mode for response feedback and/or a mode for feedback resource selection;
the feedback mode includes a first feedback mode and a second feedback mode, where the first feedback mode is: a terminal feeds back an acknowledge response ACK in a case that the terminal successfully decodes a physical downlink shared channel and/or physical downlink control channel; and a terminal feeds back a negative acknowledge response NACK in a case that the terminal fails to successfully decode a physical downlink shared channel and/or physical downlink control channel; and
the second feedback mode is: a terminal feeds back a negative acknowledge response only in a case that the terminal fails to successfully decode a physical downlink shared channel and/or physical downlink control channel.

According to a third aspect, a terminal is provided, where the terminal includes a processor and a memory, where the memory stores a program or instructions capable of running on the processor, and when the program or instructions are executed by the processor, the steps of the method according to the first aspect are implemented.

According to a fourth aspect, a terminal is provided, where the terminal include a processor and a communication interface, where processor is configured to determine a feedback mode and/or feedback resource for response feedback based on first information in a case that a terminal is scheduled to feed back hybrid automatic repeat request HARQ information of N downlink transmissions in one time unit, where N is a positive integer;
the first information includes at least one of the following: the number N of downlink transmissions, the number of group radio network temporary identities, and whether a network-side device has configured a first parameter;
the first parameter is used to indicate a feedback mode for response feedback and/or a mode for feedback resource selection;
the feedback mode includes a first feedback mode and a second feedback mode, where the first feedback mode is: a terminal feeds back an acknowledge response ACK in a case that the terminal successfully decodes a physical downlink shared channel and/or physical downlink control channel; and a terminal feeds back a negative acknowledge response NACK in a case that the terminal fails to successfully decode a physical downlink shared channel and/or physical downlink control channel; and
the second feedback mode is: a terminal feeds back a negative acknowledge response only in a case that the terminal fails to successfully decode a physical downlink shared channel and/or physical downlink control channel.

According to a fifth aspect, a readable storage medium is provided, where the readable storage medium stores a program or instructions, and when the program or instructions are executed by a processor, the steps of the method according to the first aspect are implemented.

According to a sixth aspect, a chip is provided, where the chip includes a processor and a communication interface, where the communication interface is coupled to the processor, and the processor is configured to run a program or instructions to implement the method according to the first aspect.

According to a seventh aspect, a computer program/program product is provided, where the computer program/program product is stored in a storage medium, and the computer program/program product is executed by at least one processor to implement the steps of the response feedback method according to the first aspect.

In the embodiments of this application, a terminal determines a feedback mode and/or feedback resource for response feedback based on first information in a case that the terminal is scheduled to feed back HARQ information of multiple downlink transmissions in one time unit, so that when the multiple downlink transmissions are scheduled in the same time unit, the terminal feeds back the feedback mode and feedback resource for feedback response, which can improve the effectiveness of a communication system.

### BRIEF DESCRIPTION OF DRAWINGS

FIG. 1 is a block diagram of a wireless communication system to which embodiments of this application may be applied;
FIG. 2 is a schematic flowchart of a response feedback method according to an embodiment of this application;
FIG. 3 is a schematic diagram showing that all three PDSCHs are scheduled in slot n to feed back HARQ information according to an embodiment of this application;
FIG. 4 is a schematic structural diagram of a response feedback apparatus according to an embodiment of this application;
FIG. 5 is a schematic structural diagram of a communication device according to an embodiment of this application; and
FIG. 6 is a schematic structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustration purposes, NR terms are used in most of the following descriptions, and these technologies may also be applied to other applications than the NR system application, for example, the 6th generation (6th Generation, 6G) communication system.

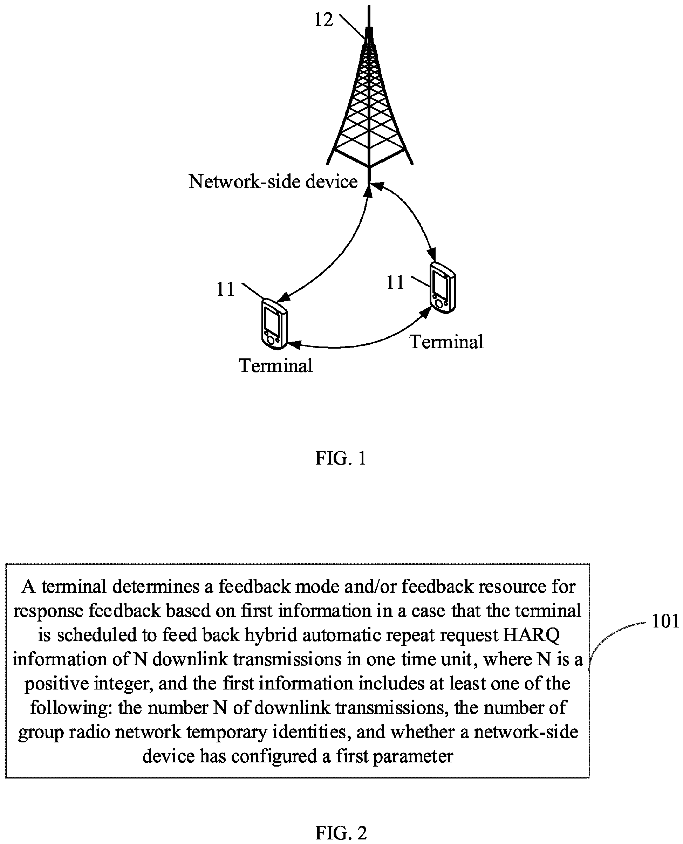

FIG. 1 is a block diagram of a wireless communication system to which the embodiments of this application is applied. The wireless communication system includes a terminal 11 and a network-side device 12. The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart-home appliance (a smart-home device having a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. It should be noted that the terminal 11 is not limited to any particular type in the embodiments of this application. The network-side device 12 may include an access network device or a core network device, where the access network device may also be called a radio access network device, a radio access network (Radio Access Network, RAN), a radio access network function, or a radio access network unit. The access network device may include a base station, a wireless local area network (Wireless Local Area Network, WLAN) access point, or a Wi-Fi node. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effect is achieved, the base station is not limited to a specific technical term. It should be noted that the base station in the NR system is only used as an example in the embodiments of this application for illustration, but a specific type of the base station is not limited.

Currently, NR technology has not supported broadcast/multicast (broadcast/multicast) features. However, in many important use scenarios, for example, in public safety and mission critical (public safety and mission critical) applications, V2X applications (V2X applications), transparent IPv4/IPv6 multicast delivery (transparent IPv4/IPv6 multicast delivery), interactive Internet TV (IPTV), software delivery over wireless (software delivery over wireless), and group communications and IoT applications (group communications and IoT applications), broadcast/multicast features can provide substantial improvements, especially in terms of system efficiency and user experience. Therefore, NR will introduce broadcast/multicast features.

In NR multicast transmission, point-to-multipoint (Point-To-Multipoint, PTM) multicast services are supported. PTM is a multicast transmission mode, in which a group radio network temporary identity (Group RNTI, G-RNTI) scrambled physical downlink control channel (PDCCH) is used for scheduling a G-RNTI scrambled physical downlink shared channel (PDSCH) to implement service scheduling and transmission. A G-RNTI scrambled PDCCH or PDSCH can be received by a group of terminals simultaneously.

After a base station transmits a PDSCH or PDCCH (for example, a PDCCH indicating semi-persistent scheduling (SPS) PDSCH release), UE receives and decodes the PDSCH/PDCCH, and then feeds back a decoding result to the base station side, informing the base station of whether the PDSCH/SPS PDSCH release PDCCH has been successfully decoded. The base station makes the next scheduling decision based on the feedback from the UE, which is called hybrid automatic repeat request (HARQ). HARQ feedback modes include HARQ-Acknowledge (ACK)/not acknowledge (NACK) and HARQ NACK only. In HARQ-ACK/NACK feedback mode, if the UE successfully decodes the PDSCH/PDCCH, it feeds back ACK, otherwise it feeds back NACK. In HARQ NACK only feedback mode, the UE feeds back NACK when it fails to successfully decode the PDSCH/PDCCH, and does not feed back information at other times. Physical uplink control channel (PUCCH) is a main channel for carrying HARQ information (HARQ information can also be carried on a physical uplink shared channel (PUSCH), and when time domain resources of PUCCH and PUSCH carrying HARQ-ACK/NACK overlap, the HARQ-ACK/NACK is multiplexed on the PUSCH for transmission). For the feedback of ACK/NACK mode, its PUCCH is UE-specific, that is, different UEs have different PUCCHs. For NACK only feedback mode, its PUCCH may be group common, meaning that different UEs can feed back NACK information of the same PDSCH on the same PUCCH. In NR, a time unit (slot or sub-slot) of HARQ feedback is determined based on k1 (PDSCH-to-HARQ feedback timing indicator) indicated in downlink control information (DCI) for downlink scheduling, where k1 represents the number of time units from a time unit where PDSCH ends to a time unit for HARQ feedback, to be specific, when UE receives PDSCH in time unit n, the UE feeds back its corresponding HARQ information in time unit n+k1. k1 can take different values for different PDSCHs. The base station first configures a k1 set through radio resource control (RRC) signaling, and then indicates specific values through DCI. If there is no k1 field in DCI, it is determined by a high-layer parameter.

For NACK only feedback mode, only PUCCH format 011 is currently supported. A PUCCH for NACK only feedback is group common. Therefore, when UE feeds back NACK on the PUCCH, a base station considers that a PDSCH corresponding to the NACK is decoded incorrectly and performs a corresponding PDSCH retransmission. When multiple PDSCHs are scheduled in the same time unit (slot/sub-slot), how the UE feeds back the NACK only of multiple PDSCHs needs to be addressed.

The following describes in detail a response feedback method provided in the embodiments of this application by using some embodiments and application scenarios thereof with reference to the accompanying drawings.

An embodiment of this application provides a response feedback method. As shown in FIG. 2, the method includes the following steps.

Step 101: A terminal determines a feedback mode and/or feedback resource for response feedback based on first information in a case that the terminal is scheduled to feed back hybrid automatic repeat request HARQ information of N downlink transmissions in one time unit, where N is a positive integer;
the first information includes at least one of the following: the number N of downlink transmissions, the number of group radio network temporary identities, and whether a network-side device has configured a first parameter;
the first parameter is used to indicate a feedback mode for response feedback and/or a mode for feedback resource selection;
the feedback mode includes a first feedback mode and a second feedback mode, where the first feedback mode is: a terminal feeds back an acknowledge response ACK in a case that the terminal successfully decodes a physical downlink shared channel and/or physical downlink control channel; and a terminal feeds back a negative acknowledge response NACK (that is, HARQ-ACK/NACK feedback mode) in a case that the terminal fails to successfully decode a physical downlink shared channel and/or physical downlink control channel; and
the second feedback mode is: a terminal feeds back a negative acknowledge response only (that is, NACK only mode) in a case that the terminal fails to successfully decode a physical downlink shared channel and/or physical downlink control channel.

In this embodiment of this application, the terminal determines the feedback mode and/or feedback resource for response feedback based on the first information in the case that the terminal is scheduled to feed back HARQ information of multiple downlink transmissions in one time unit, so that when the multiple downlink transmissions are scheduled in the same time unit, the terminal feeds back the feedback mode and feedback resource for feedback response, which can improve the effectiveness of a communication system.

The network-side device may or may not configure the first parameter. When the network-side device does not configure the first parameter, the first parameter takes the default value.

The first parameter can be used to configure a feedback mode in a scenario that the terminal is scheduled to feed back HARQ information of N downlink transmission in one time unit, and can be set to mode1 or mode2. For example, when the value of the first parameter is model, it indicates using the HARQ-ACK/NACK feedback mode; and when the value of the first parameter is mode2, it indicates using the NACK only feedback mode. Alternatively, the first parameter is used to configure whether to use the NACK only feedback mode in the scenario that the terminal is scheduled to feed back HARQ information of N downlink transmissions in one time unit, and can be set to enable or disable; or the first parameter is set to the default value disable. Alternatively, the first parameter is used to configure whether to use the HARQ-ACK/NACK feedback mode in the scenario that the terminal is scheduled to feed back HARQ information of N downlink transmissions in one time unit, and can be set to enable or disable; or the first parameter is set to the default value disable. For example, when the first parameter is enable, it indicates using the HARQ-ACK/NACK feedback mode; and when the first parameter is disabled, it indicates not using the HARQ-ACK feedback mode.

N may be an integer greater than 1. When N is greater than 1, the respective HARQ feedback modes of the N downlink transmissions are NACK only modes, that is, the feedback modes of the downlink transmissions determined according to a high-layer parameter configuration are NACK only modes. For example, when the PDSCH feedback mode is configured per G-RNTI and/or group-configured scheduling-radio network temporary identity (Group-Configured Scheduling-Radio Network Temporary Identity, G-CS-RNTI), the UE determines that the HARQ feedback modes of the downlink transmissions are NACK only modes based on the G-RNTIs and/or G-CS-RNTIs corresponding to the downlink transmissions.

The downlink transmission includes a physical downlink shared channel (PDSCH) and/or a transport block (Transport Block, TB). The time unit includes a slot and a sub-slot.

In some embodiments, the network-side device has configured the first parameter, where the first parameter indicates at least one of the following:
in a case that a terminal has been configured with or has activated one group radio network temporary identity, the terminal feeds back HARQ information of multiple downlink transmissions in the second feedback mode in one time unit;
in a case that a terminal has been configured with or has activated multiple group radio network temporary identities, the terminal feeds back HARQ information of at most one downlink transmission in the first feedback mode in one time unit;
a terminal feeds back HARQ information of multiple downlink transmissions in the first feedback mode in one time unit; and
a terminal feeds back HARQ information of multiple downlink transmissions in the second feedback mode in one time unit.

In this embodiment, regardless of the number of configured or activated group radio network temporary identities, the terminal may use the second feedback mode to feed back the HARQ information of multiple downlink transmissions, or use the first feedback mode to feed back the HARQ information of multiple downlink transmissions, or determine to use the first feedback mode or the second feedback mode for feedback according to whether the base station has configured the first parameter.

If the UE has been configured with or has activated one G-RNTI (or has been configured with one G-RNTI corresponding to the NACK only feedback mode), the base station can schedule multiple TBs and/or PDSCHs for NACK only feedback in one time unit. When the number of TBs and/or PDSCHs is less than or equal to Y, at most X orthogonal PUCCH resources are defined to correspond to at most Y TBs and/or PDSCHs scheduled for NACK only feedback, where X and Y are integers greater than 1; and when the number of TBs and/or PDSCHs is greater than Y, the NACK only feedback mode is switched to the ACK/NACK mode, and the UE makes feedback according to the ACK/NACK mode. A PUCCH corresponding to the ACK/NACK mode is determined in a PUCCH configuration (PUCCH-config)/PUCCH configuration list (PUCCH-configList) corresponding to the ACK/NACK (or determined in a PUCCH configuration corresponding to unicast PDSCH feedback). Specifically, the UE determines, based on the number of bits of the ACK/NACK, a resource set to which the PUCCH belongs, and determines the feedback resource for ACK or NACK feedback based on a PUCCH resource indicator (PUCCH resource indicator, PRI) and/or control-channel element (Control-Channel Element, CCE) index in the last downlink control information (last DCI) in the set.

Optionally, Y is less than X, or certainly, Y may be equal to X or greater than X. For example, X=15, and Y=4, or X=32, and Y=2, or the like.

Alternatively, the values of X and Y can be specified or predefined by a protocol or configured by a high-layer parameter. In some embodiments, the first information includes the number of downlink transmissions and the number of group radio network temporary identities, and that a terminal determines a feedback mode and/or feedback resource for feedback response based on first information includes:
in a case that the terminal has been configured with or has activated one group radio network temporary identity, if the number of downlink transmissions is less than or equal to Y, determining the feedback mode for feedback response to be the second feedback mode, and feeding back HARQ information of at most Y downlink transmissions using at most X orthogonal PUCCH resources, where X and Y are positive integers greater than 1; and if the number of downlink transmissions is greater than Y, determining the feedback mode for response feedback to be the first feedback mode, and determining the feedback resource for ACK or NACK feedback based on a second parameter configured by a network-side device or terminal-specific physical uplink control channel PUCCH configuration information or configuration information list; and
in a case that the terminal has been configured with or has activated multiple group radio network temporary identities, determining the feedback mode for response feedback to be the first feedback mode, and determining a feedback resource for ACK or NACK feedback based on a second parameter configured by a network-side device or terminal-specific PUCCH configuration information or configuration information list.

Optionally, Y is less than X, or certainly, Y may be equal to X or greater than X. For example, X=15, and Y=4, or X=32, and Y=2, or the like.

Alternatively, the values of X and Y can be specified or predefined by a protocol or configured by a high-layer parameter. If the UE has been configured with or has activated one G-RNTI (or has been configured with one G-RNTI/G-CS-RNTI, or has been configured with one G-RNTI corresponding to the NACK only feedback mode, or has been configured with one G-RNTI/G-CS-RNTI corresponding to the NACK only feedback mode), when the number of TBs and/or PDSCHs is less than or equal to Y, at most X orthogonal PUCCH resources are defined to correspond to at most Y TBs and/or PDSCHs scheduled for NACK only feedback; and when the number of TBs and/or PDSCHs is greater than Y, the NACK only feedback mode is switched to the ACK/NACK mode, and the UE makes feedback according to the ACK/NACK mode. A PUCCH corresponding to the ACK/NACK mode is determined in a PUCCH-config/PUCCH-configList corresponding to the ACK/NACK. Specifically, the UE determines, based on the number of bits of the ACK/NACK, a resource set to which the PUCCH belongs, and determines the feedback resource for ACK or NACK feedback based on a PRI and/or CCE index in the last downlink control information (last DCI) in the set.

Alternatively, the network-side device can ensure that there will be no more than Y TBs and/or PDSCHs, so there is no need to support the scenario where the number of TBs and/or PDSCHs is greater than Y

Otherwise, if the UE has been configured with or has activated multiple G-RNTIs (or has been configured with one G-RNTI/G-CS-RNTI, or has been configured with multiple G-RNTIs corresponding to the NACK only feedback mode, or has been configured with one G-RNTI/G-CS-RNTI corresponding to the NACK only feedback mode), the NACK only feedback mode is switched to the ACK/NACK mode, and the UE makes feedback according to the ACK/NACK mode. A PUCCH corresponding to the ACK/NACK mode is determined in a PUCCH-config/PUCCH-configList corresponding to the ACK/NACK. Specifically, the UE determines, based on the number of bits of the ACK/NACK, a resource set to which the PUCCH belongs, and determines the feedback resource for ACK or NACK feedback based on a PRI and/or CCE index in the last DCI in the set.

The group radio network temporary identity includes G-RNTI or includes G-RNTI and G-CS-RNTI.

In some embodiments, the first information includes the number of downlink transmissions and the first parameter configured by the network-side device, and that a terminal determines a feedback mode and/or feedback resource for feedback response based on first information includes:
in a case that the network-side device has been configured with the first parameter, if the number of downlink transmissions is less than or equal to Y, determining the feedback mode for feedback response to be the second feedback mode, and feeding back HARQ information of at most Y downlink transmissions using at most X orthogonal PUCCH resources, where X and Y are positive integers greater than 1; and if the number of downlink transmissions is greater than Y, determining the feedback mode for response feedback to be the first feedback mode, and determining the feedback resource for ACK or NACK feedback based on a second parameter configured by a network-side device or terminal-specific PUCCH configuration information or configuration information list; and
in a case that the network-side device has not been configured with the first parameter, determining the feedback mode for response feedback to be the first feedback mode, and determining a feedback resource for ACK or NACK feedback based on a second parameter configured by a network-side device or terminal-specific PUCCH configuration information or configuration information list.

Optionally, Y is less than X, or certainly, Y may be equal to X or greater than X. For example, X=15, and Y=4, or X=32, and Y=2, or the like.

Alternatively, the values of X and Y can be specified or predefined by a protocol or configured by a high-layer parameter. If the network-side device has configured the first parameter (the first parameter has been configured in the high-layer parameter), when the number of TBs and/or PDSCHs is less than or equal to Y, at most X orthogonal PUCCH resources are defined to correspond to at most Y TBs and/or PDSCHs scheduled for NACK only feedback; or when the number of TBs and/or PDSCHs is greater than Y, the NACK only feedback mode is switched to the ACK/NACK mode, and the UE makes feedback according to the ACK/NACK mode. A PUCCH corresponding to the ACK/NACK mode is determined in a PUCCH-config/PUCCH-configList corresponding to the ACK/NACK. Specifically, the UE determines, based on the number of bits of the ACK/NACK, a resource set to which the PUCCH belongs, and determines the feedback resource for ACK or NACK feedback based on a PRI and/or CCE index in the last DCI in the set.

Alternatively, the network-side device can ensure that there will be no more than Y TBs and/or PDSCHs, so there is no need to support the scenario where the number of TBs and/or PDSCHs is greater than Y

If the network-side device has not configured the first parameter (the first parameter has not been configured in the high-layer parameter), the NACK only feedback mode is switched to the ACK/NACK mode, and the UE makes feedback according to the ACK/NACK mode. A PUCCH corresponding to the ACK/NACK mode is determined in a PUCCH-config/PUCCH-configList corresponding to the ACK/NACK. Specifically, the UE determines, based on the number of bits of the ACK/NACK, a resource set to which the PUCCH belongs, and determines the feedback resource for ACK or NACK feedback based on a PRI and/or CCE index in the last DCI in the set.

In another embodiment, it may alternatively be as follows.

If the network-side device has not configured the first parameter (the first parameter has not been configured in the high-layer parameter), when the number of TBs and/or PDSCHs is less than or equal to Y, at most X orthogonal PUCCH resources are defined to correspond to at most Y TBs and/or PDSCHs scheduled for NACK only feedback; or when the number of TBs and/or PDSCHs is greater than Y, the NACK only feedback mode is switched to the ACK/NACK mode, and the UE makes feedback according to the ACK/NACK mode. A PUCCH corresponding to the ACK/NACK mode is determined in a PUCCH-config/PUCCH-configList corresponding to the ACK/NACK. Specifically, the UE determines, based on the number of bits of the ACK/NACK, a resource set to which the PUCCH belongs, and determines the feedback resource for ACK or NACK feedback based on a PRI and/or CCE index in the last DCI in the set.

Alternatively, the network-side device can ensure that there will be no more than Y TBs and/or PDSCHs, so there is no need to support the scenario where the number of TBs and/or PDSCHs is greater than Y

If the network-side device has configured the first parameter (the first parameter has been configured in the high-layer parameter), the NACK only feedback mode is switched to the ACK/NACK mode, and the UE makes feedback according to the ACK/NACK mode. A PUCCH corresponding to the ACK/NACK mode is determined in a PUCCH-config/PUCCH-configList corresponding to the ACK/NACK. Specifically, the UE determines, based on the number of bits of the ACK/NACK, a resource set to which the PUCCH belongs, and determines the feedback resource for ACK or NACK feedback based on a PRI and/or CCE index in the last DCI in the set. In some embodiments, the first information includes the number of downlink transmissions and the number of group radio network temporary identities;
in a case that multiple downlink transmissions correspond to multiple group radio network temporary identities, different numbers are assigned to at least one downlink transmission corresponding to the same group radio network temporary identity, at least one downlink transmission with the same number forms one downlink transmission group, downlink transmissions of a same group correspond to one response feedback, and if at least one downlink transmission in one downlink transmission group fails to be decoded, NACK is fed back;
in a case that the number of downlink transmission groups is less than or equal to Y, the feedback mode for response feedback is determined to be the second feedback mode; and HARQ information of at most Y downlink transmission groups is fed back using at most X orthogonal PUCCH resources, where X and Y are positive integers greater than 1; and
in a case that the number of downlink transmission groups is greater than Y, the feedback mode for response feedback is determined to be the first feedback mode, and a feedback resource for ACK or NACK feedback is determined based on a second parameter configured by a network-side device or terminal-specific PUCCH configuration information or configuration information list.

Optionally, Y is less than X, or certainly, Y may be equal to X or greater than X. For example, X=15, and Y=4, or X=32, and Y=2, or the like.

Alternatively, the values of X and Y can be specified or predefined by a protocol or configured by a high-layer parameter. The group radio network temporary identity includes G-RNTI or includes G-RNTI and G-CS-RNTI.

If downlink transmissions are numbered from 0 and the downlink transmissions are numbered as 0, 1, 2, ..., n, the number of downlink transmission groups is n+1, which is a maximum number plus 1.

If multiple TBs and/or PDSCHs correspond to multiple G-RNTIs, multiple TBs and/or PDSCHs corresponding to the same G-RNTI are numbered, for example, 0, 1, 2, 3, 4, ..., and NACK only feedbacks on TBs and/or PDSCHs corresponding to different G-RNTIs of the same numbers are bundled or compressed to one NACK only feedback. NACK is fed back only when all of the multiple TBs and/or PDSCHs fail to be decoded, or NACK is fed back when one of the multiple TBs and/or PDSCHs fails to be decoded. When the number of bundled/compressed TBs and/or PDSCHs is less than or equal to Y, at most X orthogonal PUCCH resources are defined to correspond to at most Y TBs and/or PDSCHs scheduled for NACK only feedback; and when the number of bundled/compressed TBs and/or PDSCHs is greater than Y, the NACK only feedback mode is switched to the ACK/NACK mode, and the UE makes feedback according to the ACK/NACK mode. A PUCCH corresponding to the ACK/NACK mode is determined in a PUCCH-config/PUCCH-configList corresponding to the ACK/NACK. Specifically, the UE determines, based on the number of bits of the ACK/NACK, a resource set to which the PUCCH belongs, and determines the feedback resource for ACK or NACK feedback based on a PRI and/or CCE index in the last DCI in the set.

Alternatively, when the feedback resource or feedback mode is determined, the above bundling or compression operation may not be performed.

In some embodiments, the first information includes the number of downlink transmissions and the number of group radio network temporary identities.

During scheduling, the network-side device schedules feedbacks on TBs and/or PDSCHs corresponding to different group radio network temporary identities for feedback in different time units. In one time unit, a terminal device only expects to be scheduled to feed back information about NACK only on TB and/or PDSCH corresponding to one group radio network temporary identity. The feedback mode for multiple TBs and/or PDSCHs corresponding to one group radio network temporary identity is as follows:

When the number of TBs and/or PDSCHs is less than or equal to Y, at most X orthogonal PUCCH resources are defined to correspond to at most Y TBs and/or PDSCHs scheduled for NACK only feedback; or when the number of TBs and/or PDSCHs is greater than Y, the NACK only feedback mode is switched to the ACK/NACK mode, and the UE makes feedback according to the ACK/NACK mode. A PUCCH corresponding to the ACK/NACK mode is determined in a PUCCH-config/PUCCH-configList corresponding to the ACK/NACK. Specifically, the UE determines, based on the number of bits of the ACK/NACK, a resource set to which the PUCCH belongs, and determines the feedback resource for ACK or NACK feedback based on a PRI and/or CCE index in the last DCI in the set.

Alternatively, the network-side device can ensure that there will be no more than Y TBs and/or PDSCHs, so there is no need to support the scenario where the number of TBs and/or PDSCHs is greater than Y

The group radio network temporary identity includes G-RNTI or includes G-RNTI and G-CS-RNTI.

In some embodiments, the first information includes the number of downlink transmissions and the number of group radio network temporary identities.

If the terminal device has been configured with or has activated one group radio network temporary identity, when the number of TBs and/or PDSCHs is less than or equal to Y, at most X orthogonal PUCCH resources are defined to correspond to at most Y TBs and/or PDSCHs scheduled for NACK only feedback; or when the number of TBs and/or PDSCHs is greater than Y, the NACK only feedback mode is switched to the ACK/NACK mode, and the UE makes feedback according to the ACK/NACK mode. A PUCCH corresponding to the ACK/NACK mode is determined in a PUCCH-config/PUCCH-configList corresponding to the ACK/NACK. Specifically, the UE determines, based on the number of bits of the ACK/NACK, a resource set to which the PUCCH belongs, and determines the feedback resource for ACK or NACK feedback based on a PRI and/or CCE index in the last DCI in the set.

Alternatively, the network-side device can ensure that there will be no more than Y TBs and/or PDSCHs, so there is no need to support the scenario where the number of TBs and/or PDSCHs is greater than Y

When the terminal device has been configured with or has activated one group radio network temporary identity, the base station schedules different TBs and/or PDSCHs in different time units during downlink TB and/or PDSCH scheduling. To be specific, the terminal device does not expect to be scheduled to feed back the feedbacks on multiple TBs and/or PDSCHs in one time unit.

The group radio network temporary identity includes G-RNTI or includes G-RNTI and G-CS-RNTI.

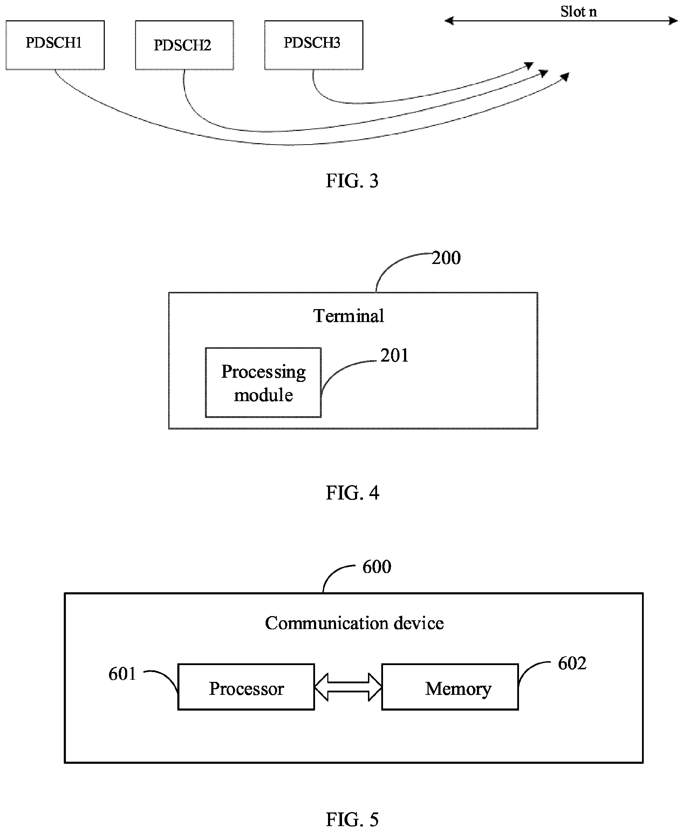

In a specific example, as shown in FIG. 3, it is assumed that PDSCH1 and PDSCH2 correspond to G-RNTI1, PDSCH3 corresponds to G-RNTI2, all the three PDSCHs are scheduled to feed back HARQ information at slot n, and their corresponding feedback modes are NACK only modes. Then PDSCH1 and PDSCH2 are assigned numbers 0 and 1 respectively, PDSCH3 is assigned number 0, PDSCH2 is classified into one group, and PDSCH1 and PDSCH3 are classified into the same group for bundling operation. NACK is fed back when either PDSCH1 or PDSCH3 fails to be decoded; or NACK is fed back only when both PDSCH1 and PDSCH3 fail to be decoded. The number of groups is 2, and two NACK only feedbacks, namely, PDSCH1/PDSCH3 and PDSCH2, are required correspondingly.

When the value of Y is 2 (or greater than 2), because the number of groups is equal to 2, the feedback mode for response feedback is determined to be the second feedback mode, and HARQ information of at most Y downlink transmissions is fed back using at most X orthogonal PUCCH resources, where X and Y are positive integers greater than 1.

In some embodiments, the first information includes the number N of downlink transmissions, N is greater than 1, and that a terminal determines a feedback mode and/or feedback resource for feedback response based on first information includes:
determining the feedback mode for response feedback to be the first feedback mode; and
determining a feedback resource for ACK or NACK feedback based on a second parameter configured by a network-side device or terminal-specific PUCCH configuration information or configuration information list.

To be specific, when the number of downlink transmissions is greater than 1, the NACK only feedback mode is switched to the ACK/NACK mode, and the UE makes feedback according to the ACK/NACK mode. A PUCCH corresponding to the ACK/NACK mode is determined in a PUCCH-config/PUCCH-configList corresponding to the ACK/NACK. Specifically, the UE determines, based on the number of bits of the ACK/NACK, a resource set to which the PUCCH belongs, and determines the feedback resource for ACK or NACK feedback based on a PRI and/or CCE index in the last DCI in the set.

In some embodiments, the first information includes the number of downlink transmissions, and that a terminal determines a feedback mode and/or feedback resource for feedback response based on first information includes:
in a case that the number of downlink transmissions is less than or equal to Y, determining the feedback mode for response feedback to be the second feedback mode; and feeding back HARQ information of at most Y downlink transmissions using at most X orthogonal PUCCH resources, where X and Y are positive integers greater than 1; and
in a case that the number of downlink transmissions is greater than Y, determining the feedback mode for response feedback to be the first feedback mode, and determining a feedback resource for ACK or NACK feedback based on a second parameter configured by a network-side device or terminal-specific PUCCH configuration information or configuration information list.

Optionally, Y is less than X, or certainly, Y may be equal to X or greater than X. For example, X=15, and Y=4, or X=32, and Y=2, or the like.

Alternatively, the values of X and Y can be specified or predefined by a protocol or configured by a high-layer parameter.

When the number of TBs and/or PDSCHs is less than or equal to Y, at most X orthogonal PUCCH resources are defined to correspond to at most Y TBs and/or PDSCHs scheduled for NACK only feedback; or when the number of TBs and/or PDSCHs is greater than Y, the NACK only feedback mode is switched to the ACK/NACK mode, and the UE makes feedback according to the ACK/NACK mode. A PUCCH corresponding to the ACK/NACK mode is determined in a PUCCH-config/PUCCH-configList corresponding to the ACK/NACK. Specifically, the UE determines, based on the number of bits of the ACK/NACK, a resource set to which the PUCCH belongs, and determines the feedback resource for ACK or NACK feedback based on a PRI and/or CCE index in the last DCI in the set.

In a specific example, when the number of TBs and/or PDSCHs is less than or equal to Y, at most X orthogonal PUCCH resources are defined to correspond to at most Y TBs and/or PDSCHs for scheduling NACK only feedback.

For example, X=15 and Y=4, meaning that at most 15 orthogonal PUCCH resources are defined to correspond to at most 4 TBs and/or PDSCHs for scheduling NACK only feedback.

For at most 4 TBs, there are four TB combinations, such as 1 TB, 2 TBs, 3 TBs, or 4 TBs. It is assumed that 1 indicates that a corresponding TB has been scheduled and needs NACK feedback, and 0 indicates that no TB is scheduled or no NACK feedback is required.

There are 4 cases for 1 TB, namely, (1,0,0,0), (0,1,0,0), (0, 0,1,0), and (0,0,0,1), where (1,0,0,0) means that the 1st TB has been scheduled and needs NACK feedback, (0,1,0,0) means that the 2nd TB has been scheduled and needs NACK feedback, (0,0,1,0) means that the 3rd TB has been scheduled and needs NACK feedback, and (0,0,0,1) means that the 4th TB has been scheduled and needs NACK feedback.

There are 6 cases for 2 TBs, namely, (1,1,0,0), (1,0,1,0), (1,0,0,1), (0,1,1,0), (0,1,0,1), and (0,0,1,1), where (1,1,0,0) means that the 1st and 2nd TBs have been scheduled and need NACK feedback, (1,0,1,0) means that the 1st and 3rd TBs have been scheduled and need NACK feedback, and so on.

There are four cases for 3 TBs, namely, (1,1,1,0), (1,1,0,1), (1, 0,1,1), and (0,1,1,1), where (1,1,1,0) means that the 1st, 2nd, and 3rd TBs have been scheduled and need NACK feedback, (1,1,0,1) means that the 1st, 2nd, and 4th TBs have been scheduled and need NACK feedback, (1,0,1,1) means that the 1st, 3rd, and 4th TBs have been scheduled and need NACK feedback, and (0,1,1,1) means that the 2nd, 3rd, and 4th TBs have been scheduled and need NACK feedback.

There is one case for 4 TBs, namely, (1,1,1,1), which means that the 1st to 4th TBs have been scheduled and need NACK feedback.

15 orthogonal PUCCH resources (each PUCCH resource is in the format 0/1) can be defined and respectively correspond to the above 15 combinations. For example, when the UE only needs to perform NACK feedback for the 1st TB, that is, (1,0,0,0), the 1st PUCCH resource is used; when the UE needs to perform NACK feedback for 4 TBs, that is, (1,1,1,1), the 15th PUCCH resource is used. There is a one-to-one mapping between the above combinations and PUCCH resources, and the mapping relationship can be predefined or configured by a high-layer parameter.

The response feedback method provided in this embodiment of this application can be executed by a response feedback apparatus. In this embodiment of this application, assuming that the response feedback apparatus performs the response feedback method, the response feedback apparatus provided in this embodiment of this application is described.

An embodiment of this application provides a response feedback apparatus. As shown in FIG. 4, the apparatus includes:
a processing module 201, configured to determine a feedback mode and/or feedback resource for response feedback based on first information in a case that a terminal is scheduled to feed back hybrid automatic repeat request HARQ information of N downlink transmissions in one time unit, where N is a positive integer;
the first information includes at least one of the following: the number N of downlink transmissions, the number of group radio network temporary identities, and whether a network-side device has configured a first parameter;
the first parameter is used to indicate a feedback mode for response feedback and/or a mode for feedback resource selection;
the feedback mode includes a first feedback mode and a second feedback mode, where the first feedback mode is: a terminal feeds back an acknowledge response ACK in a case that the terminal successfully decodes a physical downlink shared channel and/or physical downlink control channel; and a terminal feeds back a negative acknowledge response NACK in a case that the terminal fails to successfully decode a physical downlink shared channel and/or physical downlink control channel; and
the second feedback mode is: a terminal feeds back a negative acknowledge response only in a case that the terminal fails to successfully decode a physical downlink shared channel and/or physical downlink control channel.

In some embodiments, the first parameter indicates at least one of the following:
in a case that a terminal has been configured with or has activated one group radio network temporary identity, the terminal feeds back HARQ information of multiple downlink transmissions in the second feedback mode in one time unit;
in a case that a terminal has been configured with or has activated multiple group radio network temporary identities, the terminal feeds back HARQ information of at most one downlink transmission in the first feedback mode in one time unit;
a terminal feeds back HARQ information of multiple downlink transmissions in the first feedback mode in one time unit; and
a terminal feeds back HARQ information of multiple downlink transmissions in the second feedback mode in one time unit.

In some embodiments, the first information includes the number of downlink transmissions and the number of group radio network temporary identities; and
the processing module 201 is specifically configured to, in a case that the terminal has been configured with or has activated one group radio network temporary identity, if the number of downlink transmissions is less than or equal to Y, determine the feedback mode for feedback response to be the second feedback mode, and determine the feedback mode for response feedback to be the first feedback mode; and
in a case that the terminal has been configured with or has activated multiple group radio network temporary identities, determine the feedback mode for response feedback to be the first feedback mode.

In some embodiments, the first information includes the number of downlink transmissions and the first parameter configured by the network-side device; and
the processing module 201 is specifically configured to: in a case that the network-side device has configured the first parameter, if the number of downlink transmissions is less than or equal to Y, determine the feedback mode for feedback response to be the second feedback mode; and if the number of downlink transmissions is greater than Y, determine the feedback mode for response feedback to be the first feedback mode; and
in a case that the network-side device has not configured the first parameter, determine the feedback mode for feedback response to be the first feedback mode.

In some embodiments, the first information includes the number of downlink transmissions and the number of group radio network temporary identities; and
the processing module 201 is specifically configured to: in a case that multiple downlink transmissions correspond to multiple group radio network temporary identities, assign different numbers to at least one downlink transmission corresponding to the same group radio network temporary identity, where at least one downlink transmission with the same number forms one downlink transmission group, downlink transmissions of a same group correspond to one response feedback, and if at least one downlink transmission in one downlink transmission group fails to be decoded, NACK is fed back;
in a case that the number of downlink transmission groups is less than or equal to Y, determine the feedback mode for response feedback to be the second feedback mode; and
in a case that the number of downlink transmission groups is greater than Y, determine the feedback mode for response feedback to be the first feedback mode.

In some embodiments, the first information includes the number N of downlink transmissions, and N is greater than 1; and
the processing module 201 is specifically configured to: determine the feedback mode for response feedback to be the first feedback mode, and determine a feedback resource for ACK or NACK feedback based on a second parameter configured by a network-side device or terminal-specific PUCCH configuration information or configuration information list.

In some embodiments, the first information includes the number of downlink transmissions; and
the processing module 201 is specifically configured to, in a case that the number of downlink transmission groups is less than or equal to Y, determine the feedback mode for response feedback to be the second feedback mode, and feed back HARQ information of at most Y downlink transmissions using at most X orthogonal PUCCH resources, where X and Y are positive integers greater than 1; and
in a case that the number of downlink transmissions is greater than Y, determine the feedback mode for response feedback to be the first feedback mode, and determine a feedback resource for ACK or NACK feedback based on a second parameter configured by a network-side device or terminal-specific PUCCH configuration information or configuration information list.

In some embodiments, the processing module 201 is specifically configured to: determine the feedback mode for response feedback to be the second feedback mode, and feed back HARQ information of at most Y downlink transmissions using at most X orthogonal PUCCH resources, where X and Y are positive integers greater than 1.

In some embodiments, the processing module 201 is specifically configured to, after determining the feedback mode for response feedback to be the first feedback mode, determine a feedback resource for ACK or NACK feedback based on a second parameter configured by a network-side device or terminal-specific PUCCH configuration information or configuration information list.

In some embodiments, the processing module 201 is specifically configured to: determine, based on the number of bits of ACK or NACK, a resource set to which a PUCCH belongs, and determine the feedback resource in the resource set according to a PUCCH resource indicator PRI and/or control channel element CCE index in the latest downlink control information.

In some embodiments, the downlink transmission includes a physical downlink shared channel and/or a transport block.

In some embodiments, the time unit includes a slot and a sub-slot. The response feedback apparatus in this embodiment of this application may be an electronic device, for example, an electronic device with an operating system, or may be a component in an electronic device, for example, an integrated circuit or a chip. The electronic device may be a terminal or may be another device except the terminal. For example, the terminal may include but is not limited to the types of the terminal 11 listed above, and the another device may be a server, a network attached storage (Network Attached Storage, NAS), or the like, which are not specifically limited in the embodiments of this application.

The response feedback apparatus provided in this embodiment of this application can implement the processes implemented by the method embodiments in FIG. 2 and FIG. 3. To avoid repetition, details are not described herein again.

Optionally, as shown in FIG. 5, an embodiment of this application further provides a communication device 600 including a processor 601 and a memory 602, where a program or instructions are stored in the memory 602 and capable of running on the processor 601. For example, in a case that the communication device 600 is a terminal, when the program or instructions are executed by the processor 601, the steps of the foregoing embodiment of the response feedback method are implemented, with the same technical effects achieved. To avoid repetition, details are not described herein again.

An embodiment of this application further provides a terminal, where the terminal includes a processor and a memory, the memory stores a program or instructions capable of running on the processor, and when the program or instructions are executed by the processor, the steps of the foregoing response feedback method are implemented.

An embodiment of this application further provides a terminal, including a processor and a communication interface, where processor is configured to determine a feedback mode and/or feedback resource for response feedback based on first information in a case that a terminal is scheduled to feed back hybrid automatic repeat request HARQ information of N downlink transmissions in one time unit, where N is a positive integer;
the first information includes at least one of the following: the number N of downlink transmissions, the number of group radio network temporary identities, and whether a network-side device has configured a first parameter;
the first parameter is used to indicate a feedback mode for response feedback and/or a mode for feedback resource selection;
the feedback mode includes a first feedback mode and a second feedback mode, where the first feedback mode is: a terminal feeds back an acknowledge response ACK in a case that the terminal successfully decodes a physical downlink shared channel and/or physical downlink control channel; and a terminal feeds back a negative acknowledge response NACK in a case that the terminal fails to successfully decode a physical downlink shared channel and/or physical downlink control channel; and
the second feedback mode is: a terminal feeds back a negative acknowledge response only in a case that the terminal fails to successfully decode a physical downlink shared channel and/or physical downlink control channel.

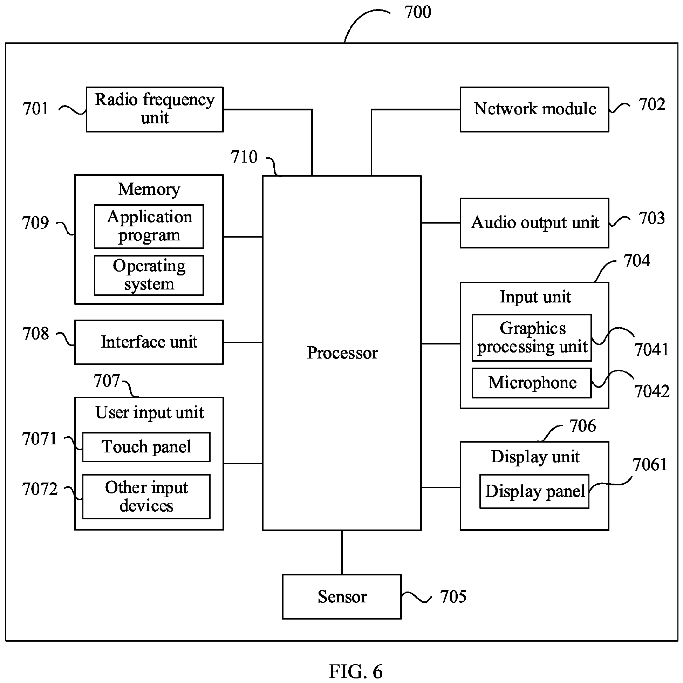

An embodiment of this application further provides a terminal, including a processor and a communication interface. This terminal embodiment corresponds to the foregoing method embodiment on the terminal side. All implementations in the foregoing method embodiment may be applicable to this terminal embodiment, with the same technical effect achieved. Specifically, FIG. 6 is a schematic diagram of a hardware structure of a terminal for implementing embodiments of this application.

The terminal 700 includes, but is not limited to, at least some of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) for supplying power to the components. The power supply may be logically connected to the processor 710 through a power management system. In this way, functions such as charge management, discharge management, and power consumption management are implemented by using the power management system. The structure of the terminal shown in FIG. 6 does not constitute any limitation on the terminal, and the terminal may include more or fewer components than shown in the figure, or combine some of the components, or have different arrangements of the components. Details are not described herein.

It should be understood that in this embodiment of this application, the input unit 704 may include a graphics processing unit (Graphics Processing Unit, GPU) 7041 and a microphone 7042. The graphics processing unit 7041 processes image data of a static picture or a video that is obtained by an image capture apparatus (for example, a camera) in a video capture mode or an image capture mode. The display unit 706 may include a display panel 7061. The display panel 7061 may be configured in a form of a liquid crystal display, an organic light-emitting diode display, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (for example, a volume control key or an on/off key), a trackball, a mouse, and a joystick. Details are not described herein.

In this embodiment of this application, after receiving downlink data from a network-side device, the radio frequency unit 701 can transmit the downlink data to the processor 710 for processing. In addition, the radio frequency unit 701 can transmit uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include first storage area for storing programs or instructions and a second storage area for storing data. The first storage area may store an operating system, an application program or instruction required by at least one function (for example, a sound playback function or an image playback function), and the like. In addition, the memory 709 may include either a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, an application processor and a modem processor are integrated in the processor 710. The application processor primarily processes operations relating to an operating system, user interfaces, application programs, and the like. The modem processor primarily processes radio communication signals, for example, being a baseband processor. It can be understood that the modem processor may alternatively be not integrated in the processor 710.

In some embodiments, the processor 710 is configured to determine a feedback mode and/or feedback resource for response feedback based on first information in a case that a terminal is scheduled to feed back hybrid automatic repeat request HARQ information of N downlink transmissions in one time unit, where N is a positive integer;
the first information includes at least one of the following: the number N of downlink transmissions, the number of group radio network temporary identities, and whether a network-side device has configured a first parameter;
the first parameter is used to indicate a feedback mode for response feedback and/or a mode for feedback resource selection;
the feedback mode includes a first feedback mode and a second feedback mode, where the first feedback mode is: a terminal feeds back an acknowledge response ACK in a case that the terminal successfully decodes a physical downlink shared channel and/or physical downlink control channel; and a terminal feeds back a negative acknowledge response NACK in a case that the terminal fails to successfully decode a physical downlink shared channel and/or physical downlink control channel; and
the second feedback mode is: a terminal feeds back a negative acknowledge response only in a case that the terminal fails to successfully decode a physical downlink shared channel and/or physical downlink control channel.

In some embodiments, the first parameter indicates at least one of the following:
in a case that a terminal has been configured with or has activated one group radio network temporary identity, the terminal feeds back HARQ information of multiple downlink transmissions in the second feedback mode in one time unit;
in a case that a terminal has been configured with or has activated multiple group radio network temporary identities, the terminal feeds back HARQ information of at most one downlink transmission in the first feedback mode in one time unit;
a terminal feeds back HARQ information of multiple downlink transmissions in the first feedback mode in one time unit; and
a terminal feeds back HARQ information of multiple downlink transmissions in the second feedback mode in one time unit.

In some embodiments, the first information includes the number of downlink transmissions and the number of group radio network temporary identities; and
the processor 710 is specifically configured to, in a case that the terminal has been configured with or has activated one group radio network temporary identity, if the number of downlink transmissions is less than or equal to Y, determine the feedback mode for feedback response to be the second feedback mode; and determine the feedback mode for response feedback to be the first feedback mode; and
in a case that the terminal has been configured with or has activated multiple group radio network temporary identities, determine the feedback mode for response feedback to be the first feedback mode.

In some embodiments, the first information includes the number of downlink transmissions and the first parameter configured by the network-side device; and
the processor 710 is specifically configured to: in a case that the network-side device has configured the first parameter, if the number of downlink transmissions is less than or equal to Y, determine the feedback mode for feedback response to be the second feedback mode; and if the number of downlink transmissions is greater than Y, determine the feedback mode for response feedback to be the first feedback mode; and
in a case that the network-side device has not configured the first parameter, determine the feedback mode for feedback response to be the first feedback mode.

In some embodiments, the first information includes the number of downlink transmissions and the number of group radio network temporary identities; and
the processor 710 is specifically configured to: in a case that multiple downlink transmissions correspond to multiple group radio network temporary identities, assign different numbers to at least one downlink transmission corresponding to the same group radio network temporary identity, where at least one downlink transmission with the same number forms one downlink transmission group, downlink transmissions of a same group correspond to one response feedback, and if at least one downlink transmission in one downlink transmission group fails to be decoded, NACK is fed back;
in a case that the number of downlink transmission groups is less than or equal to Y, determine the feedback mode for response feedback to be the second feedback mode; and
in a case that the number of downlink transmission groups is greater than Y, determine the feedback mode for response feedback to be the first feedback mode.

In some embodiments, the first information includes the number N of downlink transmissions, and N is greater than 1; and
the processor 710 is specifically configured to: determine the feedback mode for response feedback to be the first feedback mode, and determine a feedback resource for ACK or NACK feedback based on a second parameter configured by a network-side device or terminal-specific PUCCH configuration information or configuration information list.

In some embodiments, the first information includes the number of downlink transmissions; and
the processor 710 is specifically configured to: in a case that the number of downlink transmissions is less than or equal to Y, determine the feedback mode for response feedback to be the second feedback mode; and feed back HARQ information of at most Y downlink transmissions using at most X orthogonal PUCCH resources, where X and Y are positive integers greater than 1; and
in a case that the number of downlink transmissions is greater than Y, determine the feedback mode for response feedback to be the first feedback mode, and determine a feedback resource for ACK or NACK feedback based on a second parameter configured by a network-side device or terminal-specific PUCCH configuration information or configuration information list.

In some embodiments, the processor 710 is specifically configured to: determine the feedback mode for response feedback to be the second feedback mode, and feed back HARQ information of at most Y downlink transmissions using at most X orthogonal PUCCH resources, where X and Y are positive integers greater than 1.

In some embodiments, after the processor 710 is specifically configured to: determine the feedback mode for response feedback to be the first feedback mode, and determine a feedback resource for ACK or NACK feedback based on a second parameter configured by a network-side device or terminal-specific PUCCH configuration information or configuration information list.

In some embodiments, the processor 710 is specifically configured to: determine, based on the number of bits of ACK or NACK, a resource set to which a PUCCH belongs, and determine the feedback resource in the resource set according to a PUCCH resource indicator PRI and/or control channel element CCE index in the latest downlink control information.

In some embodiments, the downlink transmission includes a physical downlink shared channel and/or a transport block.

In some embodiments, the time unit includes a slot and a sub-slot.

An embodiment of this application further provides a readable storage medium, where the readable storage medium stores a program or instructions, and when the program or instructions are executed by a processor, the processes of the foregoing response feedback method embodiments are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the response feedback method, with the same technical effect achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when the computer program/program product is executed by at least one processor so as to implement the steps of the foregoing response feedback method embodiment, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A response feedback method, comprising:
determining, by a terminal, a feedback mode and/or feedback resource for response feedback based on first information in a case that the terminal is scheduled to feed back hybrid automatic repeat request HARQ information of N downlink transmissions in one time unit, wherein N is a positive integer;
the first information comprises at least one of the following: the number N of downlink transmissions, the number of group radio network temporary identities, and whether a network-side device has configured a first parameter;
the first parameter is used to indicate a feedback mode for response feedback and/or a mode for feedback resource selection;
the feedback mode comprises a first feedback mode and a second feedback mode, wherein the first feedback mode is: a terminal feeds back an acknowledge response ACK in a case that the terminal successfully decodes a physical downlink shared channel and/or physical downlink control channel; and a terminal feeds back a negative acknowledge response NACK in a case that the terminal fails to successfully decode a physical downlink shared channel and/or physical downlink control channel; and
the second feedback mode is: a terminal feeds back a negative acknowledge response only in a case that the terminal fails to successfully decode a physical downlink shared channel and/or physical downlink control channel.

2. The response feedback method according to claim 1, wherein the first parameter indicates at least one of the following:
in a case that a terminal has been configured with or has activated one group radio network temporary identity, the terminal feeds back HARQ information of multiple downlink transmissions in the second feedback mode in one time unit;
in a case that a terminal has been configured with or has activated multiple group radio network temporary identities, the terminal feeds back HARQ information of at most one downlink transmission in the first feedback mode in one time unit;
a terminal feeds back HARQ information of multiple downlink transmissions in the first feedback mode in one time unit; and
a terminal feeds back HARQ information of multiple downlink transmissions in the second feedback mode in one time unit.

3. The response feedback method according to claim 1 or 2, wherein the first information comprises the number of downlink transmissions and the number of group radio network temporary identities, and the determining, by the terminal, a feedback mode and/or feedback resource for feedback response based on first information comprises:
in a case that the terminal has been configured with or has activated one group radio network temporary identity, if the number of downlink transmissions is less than or equal to Y, determining the feedback mode for feedback response to be the second feedback mode; and if the number of downlink transmissions is greater than Y, determining the feedback mode for response feedback to be the first feedback mode; and
in a case that the terminal has been configured with or has activated multiple group radio network temporary identities, determining the feedback mode for response feedback to be the first feedback mode.

4. The response feedback method according to claim 1 or 2, wherein the first information comprises the number of downlink transmissions and the first parameter configured by the network-side device, and the determining, by the terminal, a feedback mode and/or feedback resource for feedback response based on first information comprises:
in a case that the network-side device has configured the first parameter, if the number of downlink transmissions is less than or equal to Y, determining the feedback mode for feedback response to be the second feedback mode; and if the number of downlink transmissions is greater than Y, determining the feedback mode for response feedback to be the first feedback mode; and
in a case that the network-side device has not configured the first parameter, determining the feedback mode for feedback response to be the first feedback mode.

5. The response feedback method according to claim 1 or 2, wherein the first information comprises the number of downlink transmissions and the number of group radio network temporary identities;
in a case that multiple downlink transmissions correspond to multiple group radio network temporary identities, different numbers are assigned to at least one downlink transmission corresponding to the same group radio network temporary identity, at least one downlink transmission with the same number forms one downlink transmission group, downlink transmissions of a same group correspond to one response feedback, and if at least one downlink transmission in one downlink transmission group fails to be decoded, NACK is fed back;
in a case that the number of downlink transmission groups is less than or equal to Y, the feedback mode for response feedback is determined to be the second feedback mode; and
in a case that the number of downlink transmission groups is greater than Y, the feedback mode for response feedback is determined to be the first feedback mode.

6. The response feedback method according to any one of claims 2 to 5, wherein the determining the feedback mode for response feedback to be the second feedback mode comprises:
feeding back HARQ information of at most Y downlink transmissions using at most X orthogonal PUCCH resources, wherein X and Y are positive integers greater than 1.

7. The response feedback method according to any one of claims 2 to 5, wherein after the determining the feedback mode for response feedback to be the first feedback mode, the method further comprises:
determining a feedback resource for ACK or NACK feedback based on a second parameter configured by a network-side device or terminal-specific PUCCH configuration information or configuration information list.

8. The response feedback method according to claim 7, wherein the determining a feedback resource for ACK or NACK feedback based on PUCCH configuration information or configuration information list comprises:
determining, based on the number of bits of ACK or NACK, a resource set to which a PUCCH belongs; and
determining the feedback resource in the resource set according to a PUCCH resource indicator PRI and/or control channel element CCE index in the latest downlink control information.

9. The response feedback method according to any one of claims 1 to 8, wherein the downlink transmission comprises a physical downlink shared channel and/or a transport block.

10. The response feedback method according to any one of claims 1 to 8, wherein the time unit comprises a slot and a sub-slot.

11. A response feedback apparatus, comprising:
a processing module, configured to determine a feedback mode and/or feedback resource for response feedback based on first information in a case that a terminal is scheduled to feed back hybrid automatic repeat request HARQ information of N downlink transmissions in one time unit, wherein N is a positive integer;
the first information comprises at least one of the following: the number N of downlink transmissions, the number of group radio network temporary identities, and whether a network-side device has configured a first parameter;
the first parameter is used to indicate a feedback mode for response feedback and/or a mode for feedback resource selection;
the feedback mode comprises a first feedback mode and a second feedback mode, wherein the first feedback mode is: a terminal feeds back an acknowledge response ACK in a case that the terminal successfully decodes a physical downlink shared channel and/or physical downlink control channel; and a terminal feeds back a negative acknowledge response NACK in a case that the terminal fails to successfully decode a physical downlink shared channel and/or physical downlink control channel; and
the second feedback mode is: a terminal feeds back a negative acknowledge response only in a case that the terminal fails to successfully decode a physical downlink shared channel and/or physical downlink control channel.

12. The response feedback apparatus according to claim 11, wherein the first parameter indicates at least one of the following:
in a case that a terminal has been configured with or has activated one group radio network temporary identity, the terminal feeds back HARQ information of multiple downlink transmissions in the second feedback mode in one time unit;
in a case that a terminal has been configured with or has activated multiple group radio network temporary identities, the terminal feeds back HARQ information of at most one downlink transmission in the first feedback mode in one time unit;
a terminal feeds back HARQ information of multiple downlink transmissions in the first feedback mode in one time unit; and
a terminal feeds back HARQ information of multiple downlink transmissions in the second feedback mode in one time unit.

13. The response feedback apparatus according to claim 11 or 12, wherein the first information comprises the number of downlink transmissions and the number of group radio network temporary identities; and
the processing module is specifically configured to, in a case that the terminal has been configured with or has activated one group radio network temporary identity, if the number of downlink transmissions is less than or equal to Y, determine the feedback mode for feedback response to be the second feedback mode; and determine the feedback mode for response feedback to be the first feedback mode; and
in a case that the terminal has been configured with or has activated multiple group radio network temporary identities, determine the feedback mode for response feedback to be the first feedback mode.

14. The response feedback apparatus according to claim 11 or 12, wherein the first information comprises the number of downlink transmissions and the first parameter configured by the network-side device; and
the processing module is specifically configured to: in a case that the network-side device has configured the first parameter, if the number of downlink transmissions is less than or equal to Y, determine the feedback mode for feedback response to be the second feedback mode; and if the number of downlink transmissions is greater than Y, determine the feedback mode for response feedback to be the first feedback mode; and
in a case that the network-side device has not configured the first parameter, determine the feedback mode for feedback response to be the first feedback mode.

15. The response feedback apparatus according to claim 11 or 12, wherein the first information comprises the number of downlink transmissions and the number of group radio network temporary identities; and
the processing module is specifically configured to: in a case that multiple downlink transmissions correspond to multiple group radio network temporary identities, assign different numbers to at least one downlink transmission corresponding to the same group radio network temporary identity, wherein at least one downlink transmission with the same number forms one downlink transmission group, downlink transmissions of a same group correspond to one response feedback, and if at least one downlink transmission in one downlink transmission group fails to be decoded, NACK is fed back;
in a case that the number of downlink transmission groups is less than or equal to Y, determine the feedback mode for response feedback to be the second feedback mode; and
in a case that the number of downlink transmission groups is greater than Y, determine the feedback mode for response feedback to be the first feedback mode.

16. The response feedback apparatus according to any one of claims 12 to 15, wherein the processing module is specifically configured to determine the feedback mode for response feedback to be the second feedback mode, and feed back HARQ information of at most Y downlink transmissions using at most X orthogonal PUCCH resources, wherein X and Y are positive integers greater than 1.

17. The response feedback apparatus according to any one of claims 12 to 15, wherein the processing module is specifically configured to: after determining the feedback mode for response feedback to be the first feedback mode, determine a feedback resource for ACK or NACK feedback based on a second parameter configured by a network-side device or terminal-specific PUCCH configuration information or configuration information list.

18. The response feedback apparatus according to claim 17, wherein the processing module is specifically configured to: determine, based on the number of bits of ACK or NACK, a resource set to which a PUCCH belongs, and determine the feedback resource in the resource set according to a PUCCH resource indicator PRI and/or control channel element CCE index in the latest downlink control information.

19. The response feedback apparatus according to any one of claims 11 to 18, wherein the downlink transmission comprises a physical downlink shared channel and/or a transport block.

20. The response feedback apparatus according to any one of claims 11 to 18, wherein the time unit comprises a slot and a sub-slot.

21. A terminal, comprising a processor and a memory, wherein the memory stores a program or instructions capable of running on the processor, and when the program or the instructions are executed by the processor, the steps of the response feedback method according to any one of claims 1 to 10 are implemented.

22. A readable storage medium, wherein the readable storage medium stores a program or instructions, and when the program or instructions are executed by a processor, the steps of the response feedback method according to any one of claims 1 to 10 are implemented.
